Europäisches Patentamt

**European Patent Office**

Office européen des brevets

(11) Publication number: **0 016 631**
**B2**

(12) **NEW EUROPEAN PATENT SPECIFICATION**

(45) Date of publication of the new patent
specification: **03.12.86**

(21) Application number: **80300826.7**

(22) Date of filing: **19.03.80**

(51) Int. Cl.⁴: **C 01 B 3/16**, C 10 K 3/04,
C 10 K 1/34

(54) Removal of hydrogen sulphide and carbonyl sulphide from gas stream.

(30) Priority: **19.03.79 US 22015**

(43) Date of publication of application:
**01.10.80 Bulletin 80/20**

(45) Mention of the opposition decision:
**16.02.83 Bulletin 83/07**

(45) Publication of the grant of the patent:
**03.12.86 Bulletin 86/49**

(84) Designated Contracting States:
**BE DE FR GB IT NL**

(56) References cited:
**BE-A- 466 551
DE-A-1 567 696
DE-A-2 226 215
GB-A- 946 429
GB-A-1 030 996
US-A-3 966 875**

(73) Proprietor: **AIR PRODUCTS AND CHEMICALS,
INC.
P.O. Box 538
Allentown, Pennsylvania 18105 (US)**

(72) Inventor: **Hegarty, William Patrick
31 Fairway Lane
Wescosville, Pennsylvania, 18106 (US)**

(74) Representative: **Lucas, Brian Ronald
Lucas, George & Co. 135 Westhall Road
Warlingham Surrey CR3 9HJ (GB)**

(56) References cited:

**"ULLMANNS ENCYKLPÄDIE DER
TECHNISCHEN CHEMIE", 4th Edition, Vol. 14,
pages 426-427**

**LANDOLT-BÖRNSTEIN, 6th Edition, Vol. IV,
part 4/c, pages 5, 26, 27, 184, 185, 238, 255, 280,
281 and a diagram**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

# Description

This invention relates to a process for removing hydrogen sulphide and carbonyl sulphide from a gas stream obtained by the gasification of coal or heavy hydrocarbon oil.

Gas streams obtained by the gasification of coal or heavy hydrocarbon oil typically comprise hydrogen, carbon monoxide, carbon dioxide, hydrogen sulphide and carbonyl sulphide, together with small quantities of water vapour, nitrogen, argon and methane. These gas streams can be used as a source of hydrogen by reacting the carbon monoxide with steam in a shift reactor and removing the hydrogen sulphide, carbonyl sulphide and carbon dioxide.

In the Rectisol process, described in U.S. Patent 2,863,527, essentially all the hydrogen sulphide and carbonyl sulphide are absorbed from the gas stream prior to feeding the remaining gas into the shift reactor. Any traces of sulphide not absorbed (typically less than 1 ppm by volume) are absorbed in a guard adsorber within the shift reactor.

In the Purisol process, described in U.S. Patent 3,505,784, the gas stream is first passed through a shift reactor and the outgoing hydrogen sulphide and carbonyl sulphide are absorbed.

The above identified processes are probably the most accepted commercial processes in use today where the quantity of carbonyl sulphide in the feed gas is relatively small.

One of the problems associated with both the Purisol and the Rectisol processes is that whilst the hydrogen sulphide is relatively easily absorbed in many absorbents, carbonyl sulphide is relatively difficult to absorb using physical absorbents, requiring about three times as much absorbent than an equal volume of hydrogen sulphide. Thus, in applications where the feed gas contains a substantial amount of carbonyl sulphide it is usual for physical absorbents to be dismissed as impractical and chemical absorbents used. This problem is discussed in US Patent Specification 3,966,875 and a solution is proposed involving the use of an absorbent containing specified physical absorbents inert to carbonyl sulphide together with 15 to 50 mole% water.

We have discovered that if almost all the hydrogen sulphide is removed from the gas stream prior to passing it through a shift reactor provided with a sulphur resistant shift catalyst, the residual carbonyl sulphide is effectively all converted to carbon dioxide and hydrogen sulphide. The residual hydrogen sulphide can then readily be absorbed downstream of the shift reactor. It will be appreciated that only a small fraction, if any, of the carbonyl sulphide present in the Purisol process is converted to hydrogen sulphide because of the relatively large quantity of hydrogen sulphide already present in the gas stream.

By dealing with the carbonyl sulphide in the shift reactor, the large volumes of absorbent previously required for carbonyl sulphide absorption can be replaced with a much smaller quantity required for absorbing the additional hydrogen sulphide generated by the hydrolysis of the carbonyl sulphide in the shift reactor. This in turn leads to less power consumption in the regeneration and circulation of the absorbent and/or smaller, and therefore less costly, absorbers.

According to the present invention, there is provided a process for removing hydrogen sulphide and carbonyl sulphide from a gas stream obtained by the gasification of coal or heavy hydrocarbon oil and containing inter alia hydrogen, carbon monoxide, carbon dioxide, hydrogen sulphide and carbonyl sulphide, caracterized in that said process comprises the steps of washing said gas stream with a physical absorbent comprising an organic solvent containing absorbed $CO_2$ and $H_2S$ in a first absorbent stage to remove the major portion but not all of the hydrogen sulphide but not more than 65% (by volume) of the carbonyl sulphide in said gas stream; reacting the gas leaving said first absorbtion stage with water vapour in the presence of a sulphur resistant shift catalyst to convert at least part of the carbon monoxide therein into hydrogen and to hydrolyse the carbonyl sulphide to hydrogen sulphide; washing the remaining gas with said physical absorbent containing absorbed $CO_2$ in a second absorbtion stage to remove substantially all of the hydrogen sulphide therein; and washing the gas leaving said second absorption stage with said physical absorbent in a third absorption stage to absorb $CO_2$ therefrom, and wherein at least part of said physical absorbent passes from said third absorption stage through said second absorption stage and through said first absorption stage and is regenerated and returned to said third absorption stage.

Preferably, said gas stream and/or said remaining gas are washed at a pressure from 1520 KPa to 15200 KPa (15 to 150 atmospheres) and at a temperature from −51°C to 54.5°C (−60°F to 130°F).

Advantageously, the absorbtion factor, with respect to hydrogen sulphide, in said second absorbtion stage is maintained between 1.1 and 2.0.

Preferably, the absorbent from said second absorbtion stage is heated to facilitate removal of any coadsorbed carbon dioxide on introduction of said absorbent into said first absorbtion stage.

Preferably, the absorbent used in said first and/or second absorbtion stage is one in which hydrogen sulphide is more soluble than is carbon dioxide and in which carbonyl sulphide has a solubility intermediate that of hydrogen sulphide and carbon dioxide. Advantageously, such absorbent is selected from the group consisting of N - methyl - 2 - pyrrolidone, dimethyl ethers of polyethylene glycol, methanol, propylene carbonate, and mixtures thereof.

Preferably, the gas stream contains less than 1.5 mole% gaseous sulphides.

Advantageously, the remaining gas contains over 20 mole% carbon dioxide and less than one-half mole% gaseous sulphides.

Preferably, the temperature of the absorbent entering the first absorbtion stage is 38°C (100°F) and the temperatures of the absorbent entering the second absorbent stage is 10°C (50°F).

For a better understanding of the present invention and to show that the same may be carried into effect, reference will now be made, by way of example, to the accompanying drawings, in which:

Figure 1 is a simplified flow diagram of a plant in which a process in accordance with the present invention can be carried out; and

Figure 2 is a more detailed flow diagram of a similar plant.

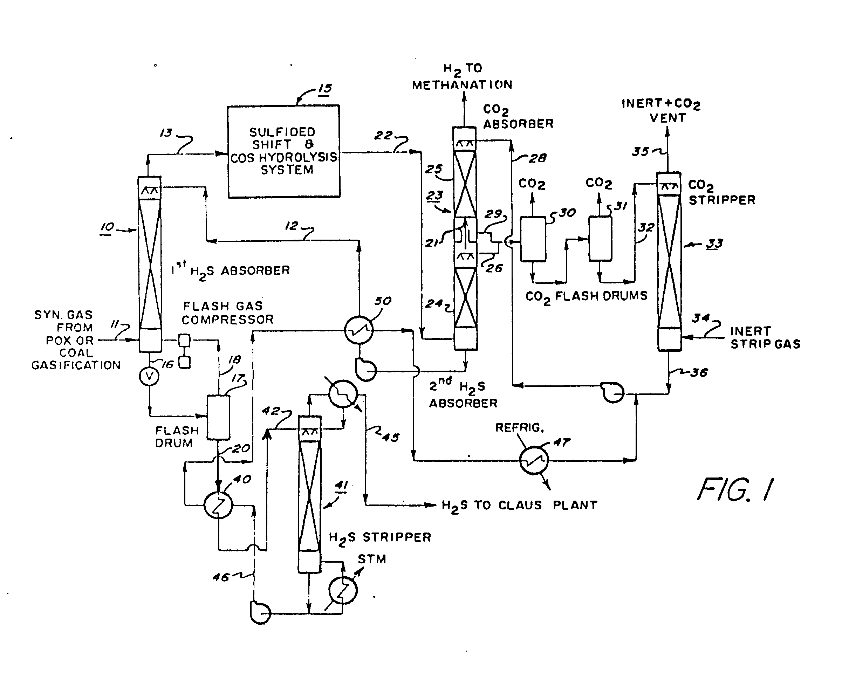

Referring to Figure 1, a gas stream obtained by the gasification of coal comprises hydrogen, carbon monoxide and carbon dioxide, together with lesser quantities of methane, hydrogen sulphide and carbonyl sulphide. The gas stream is introduced into the bottom of a first $H_2S$ absorber 10 by line 11, wherein it is contacted with an absorbent introduced into the top section of the first $H_2S$ absorber 10 by line 12.

The gas leaves the first $H_2S$ column 10 through line 13 and is sent to a shift converter system 15. The rich absorbent leaving the bottom of the first $H_2S$ absorber 10 by line 16 goes to a flash drum 17. The flashed vapours are withdrawn through line 18 and, after being compressed, are returned to the bottom part of the first $H_2S$ absorber 10 to recover valuable coabsorbed $H_2$ and CO. The absorbent from flash drum 17 is withdrawn through line 20.

In the first $H_2S$ absorber 10, the major fraction of the original $H_2S$ content of the feed gas is removed but only about 65% of the original COS. Thus, the gas introduced into shift converter system 15 contains the remaining COS as well as some of the $H_2S$ entering column 1 with the recycled absorbent introduced by line 12, as will hereinafter appear. Accordingly, the shift catalyst employed in converter 15 is one that is sulfur resistant. In this connection, such catalysts generally require a small amount, e.g. 100 ppm hydrogen sulphide to maintain their activity.

The shift reaction in converter 15 is carried out at outlet temperatures in the shift converter in the range of 370 to 170°C, and under conditions such that up to 98% or more of the CO is converted to $CO_2$ while practically all of the COS (99+%) is hydrolyzed to $CO_2$ and $H_2S$.

The gas leaving shift converter system 15 is introduced by line 22 into a second $H_2S$ absorber 24 defined by the lower section of an integrated column 23, having an upper $CO_2$ absorbtion section 25. In the second $H_2S$ absorber 24 the gas is contacted with essentially sulphur free, $CO_2$ preloaded solvent admitted via line 26 and the sulfur, now essentially all as $H_2S$, is substantially completely removed. In accordance with known absorption principles as described in Chapter VI of "Absorbtion and Extraction" by T. K. Sherwood and R. L. Pigford, McGraw-Hill Book Company, 1952, the absorbent flow, stream 26, is set to give an $H_2S$ absorbtion factor, $A_{H2S}$ greater than unity to achieve essentially complete $H_2S$ absorbtion with an appropriate number of countercurrent equilibrium contacting stages as calculated by the equation

$$\frac{Y_{N+1} - Y_1}{Y_{N+1} - K_o x_o} = \frac{A_{H2S}^{N+1} - A_{H2S}}{A_{H2S}^{N+1} - 1}$$

Where

N = number of equilibrium trays in the second $H_2S$ absorber 24

$Y_{N+1}$ = mole fraction of $H_2S$ in the column feed, stream in line 22

$Y_1$ = mole fraction of $H_2S$ in the column overhead gas, stream 21

$x_o$ = mole of fraction of $H_2S$ in the lean absorbent, stream 26

$K_o = Y_o/x_o$ = vapour liquid equilibrium constant for $H_2S$ in stream 26

$$A_{H2S} = \frac{L}{K_{H2S}V} = H_2S \text{ absorption factor}$$

where

L = total moles of $CO_2$ preloaded absorbent, stream 26

V = total moles of treated gas, stream 21

K = the average $H_2S$ vapor liquid equilibrium constant in column 24.

To achieve substantially complete removal of $H_2S$ with a reasonable number of equilibrium stages and a reasonable solvent rate, $A_{H2S}$ would typically be set in the range of 1.1 to 2.0.

In the application as shown in Figure 1, where $CO_2$ preloaded solvent is used, the temperature of the second $H_2S$ absorber 24 is substantially constant from top to bottom and $K_{H2S}$, L and V and therefore $A_{H2S}$ are roughly constant for all stages.

The rich absorbent from the bottom of the second $H_2S$ absorber 24 is heated to about 50°F in heat exchanger 50 by regenerated absorbent from heat exchanger 40. This heat exchange serves to cool the regenerated absorbent and to vaporize the bulk of the co-absorbed $CO_2$ in stream 12 so that it is stripped overhead in the first $H_2S$ absorber 10 and recycled through the catalytic shift converter 15. In first $H_2S$ absorber 10, as the bulk of the $H_2S$ in the gas stream entering through pipe 11 is absorbed, the bulk of the $CO_2$ in the absorbent stream 12 is stripped. The $CO_2$ content of the bottom absorbent stream 16 is essentially in equilibrium with the $CO_2$ content of the gas stream entering through pipe 11.

The gaseous overhead effluent from the second $H_2S$ absorber 24 is passed into the $CO_2$ absorbent section 25, in which it is contacted with absorbent admitted to the top of 25 by line 28. The rich absorbent collected at the bottom of $CO_2$ absorbent section 25 is withdrawn by line 29, a portion of the absorbent in line 29 being sent to the upper part of section 24 via line 26, as earlier stated.

The remaining liquid solvent in line 29 is treated to remove contained $CO_2$. Thus, the rich solvent in line 29 may be flashed in one or more stages or subjected to other known means for $CO_2$ removal therefrom. As illustrated in Figure 1, the rich solvent portion in line 29 is flashed in drums 30, 31, and the absorbent liquid passed to a $CO_2$ stripper for removing residual $CO_2$. As shown, the absorbent is introduced by line 32 into the top part of $CO_2$ stripper 33 and contacted with upwardly flowing stripping gas from line 34 entering the bottom part of 33. The stripping gas and stripped $CO_2$ are vented by line 35. The stripped absorbent is withdrawn from the stripper by line 36.

The portion of the rich absorbent from the first $H_2S$ absorber 10 flowing through line 20 is heated in heat exchanger 40 and sent to $H_2S$ stripper 41, being introduced into the upper part of the stripper by line 42. The $H_2S$ effluent stream withdrawn by line 45 will be sufficiently concentrated in sulphur values for direct introduction into a conventional Claus plant for recovery of sulphur.

The lean solvent withdrawn at the bottom of $H_2S$ stripper 41 by line 46, is cooled in heat exchangers 40, 50 and 47 and is introduced into line 28, together with the recovered solvent in line 37 coming from the $CO_2$ stripper 33.

The limits and preferred operating ranges for practice of the several operations of the invention vary with the particular absorbent employed. The temperature for the $H_2S$ absorption steps may thus range from minus 60°F (−51°C) to 130°F (54°C) at pressures in the range of about 15 to 150 atmospheres. Because gas solubility typically increases as temperature is decreased, lower temperatures and even refrigerated temperatures are preferred, to maximize loading and minimize solvent circulation rate. Minimum temperatures are set by the solvent freezing point coupled with the cooling that occurs on desorption or stripping with inert gas. Also, the selected temperature should not be so low that the viscosity of the liquid becomes high enough to cause a disproportionate loss in mass transfer efficiency. On the other hand, one should avoid high temperatures at which absorbent losses from volatility become an important deciding factor.

Although in certain of the known systems air may be employed in the $CO_2$ stripper, it is best to employ nitrogen or other inert gas in stripper 33, since the absorbent introduced therein contains some sulfur.

If the water content of the gas entering shift converter system 15 is insufficient, steam is added thereto to provide a steam to dry gas ratio in the order of about 1.5:1. Any of the known sulfur-resistant shift catalysts may be employed for the CO conversion and COS hydrolysis. Included among such catalysts are chromium promoted iron oxide, cobalt molybdenum on alumina or on spinel. Also, the process conditions to be employed for the CO shift are those generally employed in shift operations, such as are described is Gas Making and Natural Gas, by BP Trading Limited, London, 1972, at pages 158 to 163.

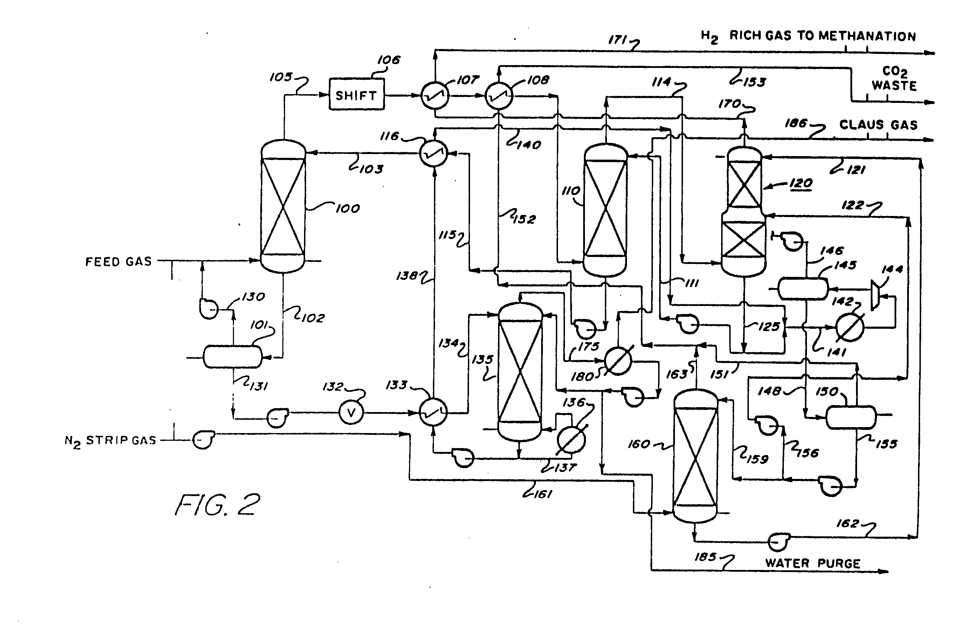

Figure 2 illustrates a plant designed to process 720 English tons per day (655 metric tons/day) of a sulphur and $CO_2$ containing gas stream using N - methyl - 2 - pyrrolidone absorbent. In particular, 1545 kg moles/hr (3400 lb.moles/hr.) of a feed gas stream comprising:

|  | mole% |
|---|---|
| Hydrogen | 43.4 |
| Carbon monoxide | 47.6 |
| Carbon dioxide | 6.4 |
| Methane | 0.52 |
| Hydrogen sulfide | 0.85 |
| Carbonyl sulfide | 0.04 |
| Water | 0.22 |
| Nitrogen | 0.18 |
| Argon | 0.73 |

are introduced into a first $H_2S$ absorber 100 at a pressure of 674 psia (46 atmospheres) and at 110°F (43°C) together with a small amount of gas recovered by flashing in drum 101 the rich absorbent withdrawn from absorber 100 by line 102.

The absorbent stream is introduced at 100°F (38°C) into first $H_2S$ absorber 100 by line 103 at a rate of 1180 lb.moles/hr. (536 kg moles/hr.) The absorbent contains carbon dioxide (28.2 mol%) and water (15.5 mole%). The gaseous effluent discharged from absorber 100 through line 105 contains, among other components:

|  | mole% |
|---|---|
| Hydrogen | 37.9 |
| Carbon monoxide | 41.4 |
| Carbon dioxide | 19.4 |
| Methane | 0.5 |
| Hydrogen sulfide | 0.1 |
| Carbonyl sulfide | 0.02 |

The CO shift in shift converter system 106 is carried out at those conditions of temperature and pressure to obtain maximum utilization of the sulphur resistant shift catalyst. One preferred catalyst is marketed as an Exxon Topsoe SSK catalyst. Utilization of this catalyst is described in a paper entitled "Sulfur Tolerant Shift Process and Catalyst", presented by Ib Dybkjaer, Hans Bohlbro, C. L. Aldredge and K. L. Riley at the November, 1978 meeting of the American Institute of Chemical Engineers held in Miami, Florida.

The gas from first $H_2S$ absorber 100 is heated and combined with steam in the shift conversion system 106 so that, after shift and COS hydrolysis are completed and the stream is cooled to condense excess steam it has the following composition:

|  | mole% |
| --- | --- |
| Hydrogen | 55.8 |
| Carbon monoxide | 0.6 |
| Carbon dioxide | 41.0 |
| Methane | 0.3 |
| Hydrogen sulfide | 0.1 |
| Carbonyl sulfide | nil |

The remaining gas leaving the shift converter system 106 (which would typically include a cooler saturation system with the shift reactors) at about 100°F (38°C) are cooled to about 60°F (16°C) in heat exchanger 107 and further cooled to 50°F (10°C) in heat exchanger 108. They are then introduced into the bottom of the second $H_2S$ absorber 110. The absorbent introduced into the upper part of second $H_2S$ absorber 110 through line 111, is not significantly different in composition from that entering the upper part of first $H_2S$ absorber 100, but such stream will be of lower temperature (about 50°F = 10°C) and is essentially sulphur free. The absorbent flow is set to give an absorption factor with respect to $H_2S$ of 1.3 with sufficient countercurrent equilibrium contacting stages to obtain substantially complete $H_2S$ absorption. This fixes the N - methyl - 2 - pyrrolidone flow at the aforementioned rate of 1180 lb. moles/hr. (536 kg moles/hr).

The overhead desulfurized effluent leaving second $H_2S$ absorber 110 by line 114 will comprise principally hydrogen and $CO_2$ and will be essentially free of sulphur. The recovered rich absorbent withdrawn by line 115 will contain dissolved $H_2S$ and $CO_2$. The liquid in line 115 is heated in heat exchanger 116 and returned to the top of first $H_2S$ absorber 100 by line 103. The gaseous effluent in line 114 is passed to the bottom part of a split column 120 for removal of $CO_2$ by solvent absorption. The absorbent for such $CO_2$ removal is admitted to the upper part of column 120 by line 121. The absorbent here employed is the same as that used in the desulfurization columns, the source of which will hereinafter be described. The absorbent in line 121 is essentially free of $H_2$, CO and $CO_2$. Additional absorbent is admitted intermediate the upper and lower sections of column 120 by line 122. The absorbent in line 122 will contain dissolved $CO_2$ (up to about 10 mole%). To obtain desired high absorption of $CO_2$, the absorbent is desirably admitted to column 120 at sub-ambient temperature, preferably at about 10°F (−12°C).

The rich liquid absorbent is withdrawn from the bottom of split column 120 by line 125 and split into a minor portion (about 15 mole%), which is passed to second $H_2S$ absorber 110 via line 111, while the other portion is chilled and expanded and further treated as will be described hereinafter.

The rich absorbent withdrawn from the first $H_2S$ absorber through line 102 after flashing in drum 101, provides a gas phase discharged by line 130 and a liquid phase withdrawn through line 131. The gas phase in line 130 is compressed to operating pressure and recycled to join the fresh feed entering the bottom of absorber 100 to recover $H_2$ and CO dissolved in line 102. The absorbent in line 131 is expanded at 132, heated in heat exchanger 133 and introduced by line 134 into the upper part of $H_2S$ stripper 135. The stripped absorbent, consisting almost entirely of organic solvent and water, is discharged at the bottom of $H_2S$ stripper 135, a portion being returned through reboiler 136 and the rest being repressured in line 137 and thereby pumped through heat exchanger 133 into line 138. As a result of heat exchange at heat exchanger 133, the liquid is cooled by about 200°F (110°C) and passed by line 138 through heat exchanger 116 wherein it is further cooled by exchange with the liquid being passed from line 115 into line 103. As a result of such exchange, the liquid in line 138 is cooled to 65—75°F (18—24°C) while the liquid entering $H_2S$ absorber 100 through line 103 is warmed to about 100°F (38°C).

The liquid from line 138, after cooling in heat exchanger 116, is sent by line 140 to join the major portion of the absorber discharged from the $CO_2$ absorber 120 that is to be chilled and expanded, as earlier indicated. The absorbent from line 140 and the portion from line 125 are combined in line 141 and passed through a chiller 142 wherein they are cooled to about 34°F (1°C). The chilled absorbent, containing dissolved $CO_2$, is expanded at 144 to a pressure of about 20 atmospheres and subjected to liquid-vapour separation by flashing in drum 145. The vaporized portion leaves drum 145 by line 146 and is recycled to join the gas products in line 114 being sent to $CO_2$ absorber column 120 to receive flashed $H_2$.

The liquid product discharged from drum 145 is passed by line 158 into another flash drum 150 for further liquid-vapor separation at just above ambient pressure. The vapour product stream discharged from drum 150, consisting almost entirely of $CO_2$, is vented by lines 151, 152 and 153, passing enroute through heat exchanger 108 wherein it serves to cool the products being passed from shift conversion to the second $H_2S$ absorber 110.

The liquid product discharged from drum 150 by line 155 is composed of semi-rich absorbent containing dissolved $CO_2$ (about 3 mole%). A portion of this semi-rich absorbent is introduced into the intermediate portion of $CO_2$ absorber 120 via lines 156 and 122, while the remainder is introduced into the upper portion of $CO_2$ stripper 160 by line 159. Stripping is effected in 160 by introducing into the bottom thereof an inert gas, such as nitrogen, by line 161. The stripped lean absorbent discharged from $CO_2$ stripper 160 through line 162 is pumped into line 121 to provide the absorbent solvent introduced into the upper part of $CO_2$ absorber 120. The stripped $CO_2$, together with the inert stripping gas, is discharged from the top of 160 by line 163 and joins the gas products being passed from line 151 into line 152, to be vented through line 153.

The unabsorbed gas products withdrawn as overhead effluent from $CO_2$ absorber 120 by line 170 are heat exchanged at 107 to cool the products of the shift conversion, and then sent to methanation or other desired disposition via line 171. The hydrogen-rich product gas in line 171 will contain over 95 to 97 or more mole% hydrogen and a total of no more than about 2% oxides of carbon, which is chiefly CO, and will be essentially free of sulphur.

The stripped vapor products withdrawn overhead by line 175 from $H_2S$ stripper 135 are partially condensed at 180, a part of the condensed liquid portion being returned as reflux to the upper portion of 135, and the remainder discharged as waste through line 185, being composed largely of water containing a minor amount of organic solvent. The uncondensed vapor portion from 180 withdrawn through line 186, is sent to a conventional Claus unit for recovery of sulphur values. The vapor product · sent to the Claus unit will contain about 35 mole% of sulfur gas, chiefly $H_2S$, and will be substantially free of the organic solvent employed in desulfurization.

Absorbent for the initial start-up and for make up of solvent losses in operation, may be introduced under suitable control into the second $H_2S$ adsorber, for example by introducing such absorbent into line 111.

## Claims

1. A process for removing hydrogen sulphide and carbonyl sulphide from a gas stream obtained by the gasification of coal or heavy hydrocarbon oil and containing *inter alia* hydrogen, carbon monoxide, carbon dioxide, hydrogen sulphide and carbonyl sulphide, characterized in that said process comprises the steps of washing said gas stream with a physical absorbent comprising an organic solvent containing absorbed $CO_2$ and $H_2S$ in a first absorbent stage to remove the major portion but not all of the hydrogen sulphide but not more than 65% (by volume) of the carbonyl sulphide in said gas stream; reacting the gas leaving said first absorbtion stage with water vapour in the presence of a sulphur resistant shift catalyst to convert at least part of the carbon monoxide therein into hydrogen and to hydrolyse the carbonyl sulphide to hydrogen sulphide; washing the remaining gas with said physical absorbent containing absorbed $CO_2$ in a second absorbtion stage to remove substantially all of the hydrogen sulphide therein; and washing the gas leaving said second absorption stage with said physical absorbent in a third absorption stage to absorb $CO_2$ therefrom, and wherein at least part of said physical absorbent passes from said third absorption stage through said second absorption stage and through said first absorption stage and is regenerated and returned to said third absorption stage.

2. A process according to Claim 1, characterized in that said gas stream and/or said remaining gas are washed at a pressure from 1520 KPa to 15200 KPa (15 to 150 atmospheres) and at a temperature from −51°C to 54.5°C (−60 to 130°F).

3. A process according to Claim 1 or 2, characterized in that the absorption factor, with respect to hydrogen sulphide in said second absorbtion stage is maintained between 1.1 and 2.0.

4. A process according to any preceding Claim, characterized in that the absorbent from said second absorbtion stage is heated to facilitate removal of any coadsorbed carbon dioxide on introduction of said absorbent into said first absorbtion stage.

5. A process according to any preceding Claim, characterized in that the absorbent used in said first and/or second absorption stage is one in which hydrogen sulphide is more soluble than is carbon dioxide and in which carbonyl sulphide has a solubility intermediate that of hydrogen sulphide and carbon dioxide.

6. A process according to Claim 5, characterized in that the absorbent is selected from the group consisting of N - methyl - 2 - pyrrolidone, dimethyl ethers of polyethylene glycol, methanol, propylene carbonate, and mixtures thereof.

7. A process according to any preceding claim, characterized in that said gas stream contains less than 1.5 mole% gaseous sulphides.

8. A process according to any preceding Claim, characterized in that the remaining gas contains over 20 mole% carbon dioxide and less than one-half mole% gaseous sulphides.

9. A process according to any preceding claim, characterized in that the temperature of the absorbent entering the first absorbtion stage is 38°C (100°F) and the temperatures of the absorbent entering the second absorbent stage is 10°C (50°F).

## Patentansprüche

1. Ein Verfahren zur Entfernung von Schwefelwasserstoff und Kohlenoxidsulfid aus einem Gasstrom, der durch Vergasung von Kohle oder einem schweren Kohlenwasserstofföl erhalten wurde und unter anderem Wasserstoff, Kohlenmonoxid, Kohlendioxid, Schwefelwasserstoff und Kohlenoxidsulfid enthält, dadurch gekennzeichnet, daß das Verfahren die Schritte Waschen des genannten Gasstroms mit einem physikalischen Absorbens, das ein organisches Lösungsmittel, das absorbiertes $CO_2$ und $H_2S$ enthält, umfaßt, in

einer ersten Absorptionsstufe, um den Hauptanteil, aber nicht den gesamten Schwefelwasserstoff, jedoch nicht mehr als 65% (Volumen-%) des Kohlenoxidsulfids im genannten Gasstrom zu entfernen; Umsetzen des Gases, das die erste Absorptionsstufe verläßt, mit Wasserdampf in Gegenwart eines schwefelresistenten Shiftkatalysators, um wenigstens einen Teil des Kohlenmonoxids darin in Wasserstoff umzuwandeln und um das Kohlenoxidsulfid in Schwefelwasserstoff zu hydrolysieren; Waschen des verbliebenen Gases mit dem genannten physikalischen Absorbens, das absorbiertes $CO_2$ enthält, in einer zweiten Absorptionsstufe, um im wesentlichen den gesamten darin enthaltenen Schwefelwasserstoff zu entfernen; und Waschen des Gases, das die genannte zweite Absorptionsstufe verläßt, mit dem genannten physikalischen Absorbens in einer dritten Absorptionsstufe, um $CO_2$ aus dem Gas zu absorbieren, umfaßt, und in dem wenigstens ein Teil des genannten physikalischen Absorbens aus der genannten dritten Absorptionsstufe durch die genannte zweite Absorptionsstufe und durch die genannte erste Absorptionsstufe strömt und regeneriert und in die genannte dritte Absorptionsstufe zurückgeführt wird.

2. Ein Verfahren nach Anspruch 1, dadurch gekennzeichnet, daß der genannte Gasstrom und/oder das genannte verbliebene Gas bei einem Druck von 1520 kPa bis 15200 kPa (15 bis 150 Atmosphären) und bei einer Temperatur von −51°C bis 54,5°C (−60 bis 130°F) gewaschen werden.

3. Ein Verfahren nach Anspruch 1 oder 2, dadurch gekennzeichnet, daß der Absorptionsfaktor bezogen auf den Schwefelwasserstoff in der genannten zweiten Absorptionsstufe zwischen 1,1 und 2,0 gehalten wird.

4. Ein Verfahren nach einem beliebigen vorangehenden Anspruch, dadurch gekennzeichnet, daß das Absorbens aus der genannten zweiten Absorptionsstufe bei der Einleitung des genannten Absorbens in die genannte erste Absorptionsstufe erhitzt wird, um die Entfernung des ganzen coadsorbierten Kohlendioxids zu unterstützen.

5. Ein Verfahren nach einem beliebigen vorangehenden Anspruch, dadurch gekennzeichnet, daß das Absorbens, das in der genannten ersten und/oder zweiten Absorptionsstufe verwendet wird eines ist, in dem Schwefelwasserstoff löslicher ist als Kohlendioxid, und in dem Kohlenoxidsulfid eine Löslichkeit aufweist, die zwischen der von Schwefelwasserstoff und der von Kohlendioxid liegt.

6. Ein Verfahren nach Anspruch 5, dadurch gekennzeichnet, daß das Absorbens aus der Gruppe ausgewählt ist, die aus N - Methyl - 2 - pyrrolidon, Dimethylethern von Polyethylenglycol, Methanol, Propylencarbonat und deren Mischungen besteht.

7. Ein Verfahren nach einem beliebigen vorangehenden Anspruch, dadurch gekennzeichnet, daß der genannte Gasstrom weniger als 1,5 Mol-% gasförmige Sulfide enthält.

8. Ein Verfahren nach einem beliebigen vorangehenden Anspruch, dadurch gekennzeichnet, daß das verbliebene Gas mehr als 20 Mol-% Kohlendioxid und weniger als 1/2 Mol-% gasförmige Sulfide enthält.

9. Ein Verfahren nach einem beliebigen vorangehenden Anspruch, dadurch gekennzeichnet, daß die Temperatur des Absorbens, das in die erste Absorptionsstufe eintritt, 38°C (100°F) beträgt und die Temperaturen des Absorbens, das in die zweite Absorbensstufe eintritt, 10°C (50°F) beträgt.

## Revendications

1. Procédé pour l'élimination du sulfure d'hydrogène et de l'oxysulfure de carbone d'un courant de gaz obtenu par la gazéification du charbon ou d'une huile hydrocarbonée lourde et contenant entre autres de l'hydrogène, du monoxyde de carbone, du dioxyde de carbone, du sulfure d'hydrogène et de l'oxysulfure de carbone, caractérisé en ce que ledit procédé comprend les stades de lavage dudit courant de gaz avec un absorbant physique comprenant un solvant organique contenant du $CO_2$ et de l'$H_2S$ absorbés dans un premier étage d'absorption pour éliminer la majeure partie mais non la totalité du sulfure d'hydrogène mais pas plus de 65% (en volume) de l'oxysulfure de carbone dudit courant de gaz; réaction du gaz quittant le premier étage d'absorption avec de la vapeur d'eau en présence d'un catalyseur de conversion résistant au soufre pour en transformer au moins une partie du monoxyde de carbone en hydrogène et pour hydrolyser l'oxysulfure de carbone en sulfure d'hydrogène; lavage du gaz restant avec ledit absorbant physique contenant du $CO_2$ absorbé dans un second étage d'absorption pour en éliminer pratiquement la totalité du sulfure d'hydrogène et lavage du gaz quittant ledit second étage d'absorption avec ledit absorbant physique dans un troisième étage d'absorption pour en absorber le $CO_2$, et où au moins une partie dudit absorbant physique passe dudit troisième étage d'absorption à travers ledit second étage d'absorption et à travers ledit premier étage d'absorption et est régénérée et renvoyée audit troisième étage d'absorption.

2. Procédé selon la revendication 1, caractérisé en ce que ledit courant de gaz et/ou ledit gaz restant sont lavés à une pression de 1 520 kPa à 15 200 kPa et à une température de −51°C (−60°F) à 54,5°C (130°F).

3. Procédé selon l'une des revendications 1 ou 2, caractérisé en ce que le facteur d'absorption, relativement au sulfure d'hydrogène dans ledit second étage d'absorption, est maintenu entre 1,1 et 2,0.

4. Procédé selon l'une quelconque des revendications précédentes, caractérisé en ce que l'absorbant dudit second étage d'absorption est chauffé pour faciliter l'élimination de tout dioxyde de carbone coadsorbé lors de l'introduction dudit absorbant dans ledit premier étage d'absorption.

5. Procédé selon l'une quelconque des revendications précédentes, caractérisé en ce que l'absorbant utilisé dans ledit premier et/ou ledit second étage d'absorption est tel que le sulfure d'hydrogène y est plus soluble que le dioxyde de carbone et l'oxysulfure de carbone y a une solubilité intermédiaire à celle du sulfure d'hydrogène et du dioxyde de carbone.

6. Procédé selon la revendication 5, caractérisé en ce que l'absorbant est choisi parmi le groupe constitué par la N - méthyl - 2 - pyrrolidone, les éthers diméthyliques du polyéthylène glycol, le méthanol, le carbonate de propylène et leurs mélanges.

7. Procédé selon l'une quelconque des revendications précédentes caractérisé en ce que ledit courant de gaz contient moins de 1,5 mole% de sulfures gazeux.

8. Procédé selon l'une quelconque des revendications précédentes caractérisé en ce que le gaz restant contient plus de 20 moles% de dioxyde de carbone et moins de 0,5 mole% de sulfures gazeux.

9. Procédé selon l'une quelconque des revendications précédentes, caractérisé en ce que la température de l'absorbant pénétrant dans le premier étage d'absorption est de 38°C (100°F) et la température de l'absorbant entrant dans le second étage d'absorption est de 10°C (50°F).

FIG. 1

FIG. 2